# FASCICULE DE BREVET EUROPEEN

(11) **EP 1 058 322 B1**
(45) Date de publication et mention de la délivrance du brevet: **03.08.2005**
(21) Numéro de dépôt: 00401352.0
(22) Date de dépôt: 17.05.2000
(51) Int. Cl.: H01L 41/09

(54) **Mécanisme de déplacement utilisant un organe d'actionnement piezo-électrique**
Bewegungsmechanismus mit piezoelektrischen Antrieb
Moving mechanism using a piezo-electric actuator

(30) Priorité: 04.06.1999 FR 9907101
(43) Date de publication de la demande: 06.12.2000
(73) Titulaire: Norbert Beyrard France (SARL), 75008 Paris (FR)
(72) Inventeur: Beyrard, Norbert, 92200 Neuilly sur Seine (FR)
(74) Mandataire: Gaglione, Renaud

(56) Documents cités:
- US-A- 5 049 775
- PATENT ABSTRACTS OF JAPAN vol. 016, no. 415 (E-1257), 2 septembre 1992 (1992-09-02) & JP 04 140074 A (MATSUSHITA ELECTRIC IND CO LTD), 14 mai 1992 (1992-05-14)
- PATENT ABSTRACTS OF JAPAN vol. 012, no. 130 (E-603), 21 avril 1988 (1988-04-21) & JP 62 254669 A (OLYMPUS OPTICAL CO LTD), 6 novembre 1987 (1987-11-06)

## Description

L'invention est relative à un dispositif d'actionnement comprenant au moins un moteur piëzo-électrique et une pièce mobile sous l'action dudit moteur piézo-électrique.

Le document EP-A-0 633 616 décrit un tel dispositif dans lequel le moteur comprend un élément piézo-électrique qui présente plusieurs électrodes sur sa surface.

Le document US 5 049 775 divulgue un dispositif d'actionnement comprenant au moins un moteur piézo-électrique et une pièce mobile. Ledit moteur piézo-électrique est formé d'au moins deux éléments piézo-électriques associés à des moyens d'alimentation pour se déformer l'un et l'autre en flexion. Un élément de transmission en forme de V est fixé aux deux éléments piézo-électriques pour s'engager et se désengager d'une micro-crémaillère prévue sur la pièce mobile (2). Dans une partie du cycle de déformation, l'élément de transmission en forme de V exerce une force sur une paroi de la micro-crémaillère pour déplacer la pièce mobile. Pour n'exercer aucun effort sur la pièce mobile dans une deuxième partie du cycle de déformation, l'élément de transmission en forme de V est soulevé au-dessus de la micro-crémaillère par une déformation en flexion simultanée des deux éléments piézo-électriques.

Le document JP 62 254 669 divulgue un dispositif pour détecter un angle de rotation d'un rotor. Un stator comprend un élément piézo-électrique bi-morphe prévu pour s'engager dans une micro-crémaillère prévue sur le rotor et pour générer un nombre d'impulsions électriques correspondant au nombre de créneaux de la mini-crémaillère engagés et désengagées au cours de la rotation du rotor. Le préambule de la revendication 1 se fonde sur ce document.

Le document JP 04 14 0074 divulgue un dispositif d'actionnement comprenant plus particulièrement au moins un moteur piézo-électrique et une pièce mobile, dans lequel ledit moteur piézo-électrique est formé d'au moins un élément piézo-électrique associé à des moyens d'alimentation en courant électrique permettant d'induire des déformations oscillatoires en élongation dudit élément piézo-électrique, la pièce mobile comprenant au moins une micro-crémaillère destinée à permettre la transmission à la pièce mobile de la force motrice engendrée par les déformations oscillatoires de l'élément piézo-électriques, la micro-crémaillère étant formée d'une succession de dièdres présentant une première paroi ayant une hauteur de l'ordre de grandeur de l'amplitude des déformations oscillatoires de l'élément piézo-électrique et présentant une deuxième paroi formant un angle aigu avec la première paroi, une tige de transmission des déformations étant associée à l'élément piézo-électrique pour venir s'engager et se désengager de la micro-crémaillère lorsque l'élément piézo-électrique se déforme de façon oscillatoire.

D'un côté de cet élément piézo-électrique est disposé une pièce de transmission de mouvement en contact avec la pièce mobile, et de l'autre côté, un ressort.

En alimentant l'élément piézo-électrique de façon adéquate, la combinaison de la flexion de l'élément piézo-électrique et de la force de rappel du ressort induit une rotation elliptique de l'élément piézo-électrique dont la force motrice est transmise par frottement à la pièce mobile par l'intermédiaire de la pièce de transmission.

Le problème de ce type de moteurs est leur complexité de mise en oeuvre, notamment au niveau du réglage entre l'alimentation électrique et la force mécanique appliquée par le ressort.

En effet, de cette combinaison dépend la formation de la rotation elliptique de la pièce de transmission. Celle-ci ne devant venir en contact avec la pièce mobile que sur la partie du cycle correspondant au sens de déplacement souhaité.

De plus, la transmission de la force motrice par frottement entre la pièce de transmission et la pièce mobile induit une perte d'énergie importante.

Ce dispositif présente également une taille relativement importante en vue de son application, notamment pour des relais électriques.

L'invention vise donc à remédier à les inconvénients mentionnés ci-dessus en fournissant un dispositif d'actionnement à l'aide d'une pièce mobile déplacé par un moteur piézo-électrique qui soit de plus petite taille et plus simple dans sa mise en oeuvre que ceux de l'art antérieur. En particulier, l'invention vise à fournir un tel dispositif d'actionnement dont le fonctionnement ne nécessite pas l'utilisation d'une force mécanique extérieure, telle que celle fournit par un ressort, pour provoquer le déplacement de la pièce mobile.

A cet effet, l'invention propose un dispositif d'actionnement selon la revendication 1.

La micro crémaillère présente une surface sur laquelle, dans une partie du cycle de déformation, l'élément piézo-électrique exerce une force permettant le déplacement de la pièce mobile et une deuxième surface le long de laquelle, sur une deuxième partie du cycle de déformation, l'élément piézo-électrique n'exerce sensiblement aucun effort sur la pièce mobile.

Par exemple, la micro crémaillère est formée d'une succession de dièdres dont la hauteur est de l'ordre de grandeur de l'amplitude des déformations oscillatoires de l'élément plézo-électrique.

Une tige de transmission des déformations est associée à l'élément piézo-électrique pour venir s'engager et se désengager de la micro crémaillère lorsque l'élément plézo-électrique se déforme de façon oscillatoire.

Dans une premier mode de réalisation de l'élément piézo-électrique, il se déformation essentiellement par élongation.

Un ressort peut alors être associé à la tige de transmission pour faciliter le passage de la tige de transmission d'un dièdre au dièdre adjacent lors du déplacement de la pièce mobile.

Dans une deuxième mode de réalisation de l'élément piézo-électrique, il se déformation essentiellement par élongation et par flexion.

Dans un premier mode de réalisation, le dispositif comprend une micro crémaillère et un moteur piézo-électrique, un ressort de rappel étant associé à l'élément mobile.

Dans un deuxième mode de réalisation, le dispositif comprend deux micro crémaillères et deux moteurs piézo-électriques.

En variante de ces deux modes de réalisation, le dispositif comprend en outre des moyens de blocage en position de la pièce mobile.

D'autres objets et avantages de l'invention apparaîtront au cours de la description qui suit en référence aux dessins annexés, illustrant divers modes de réalisation, dessins dans lesquels :

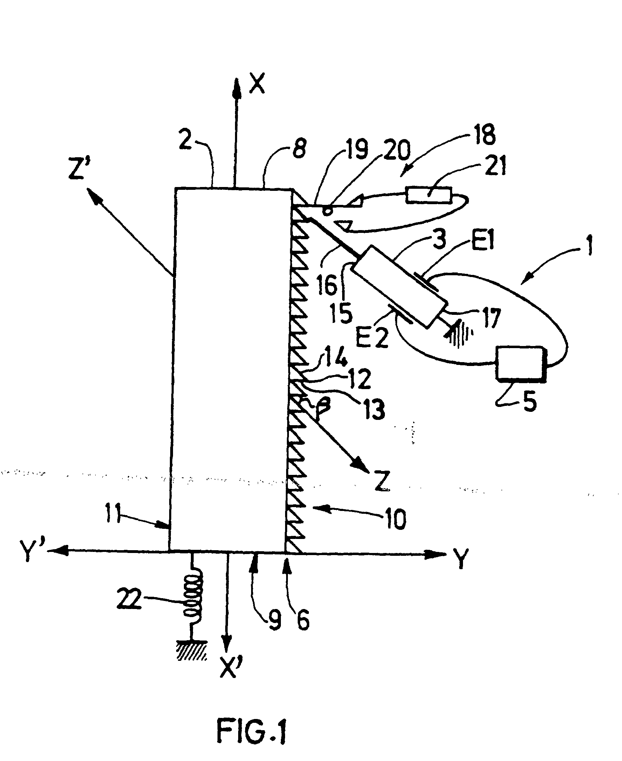

- la figure 1 et une vue simplifiée et à plat d'un premier mode de réalisation d'un dispositif d'actionnement dont la pièce mobile comprend une micro crémaillère et est déplacée par un moteur piézo-électrique ;
- la figure 2 et une vue simplifiée et à plat d'un deuxième mode de réalisation d'un dispositif d'actionnement dont la pièce mobile comprend deux micro crémaillères et est déplacée par deux moteurs piézo-électriques ;
- les figures 3 et 4 illustrent respectivement l'étape d'engagement et de désengagement de la tige de transmission associée à une première variante d'un élément piézo-électrique se déformant essentiellement par élongation ;
- les figures 5 et 6 illustrent respectivement l'étape d'engagement et de désengagement de la tige de transmission associé à une deuxième variante d'un élément piézo-électrique se déformant par élongation et par flexion.

Un dispositif d'actionnement comprend au moins un moteur piézo-électrique 1 et une pièce mobile 2 sous l'action dudit moteur piézo-électrique 1.

Le moteur piézo-électrique 1 comprend au moins un élément 3, 4 formé en matériau piézo-électrique associé à un moyen d'alimentation électrique 5 apte à exciter au moins un mode de résonance de l'élément piézo-électricité 3, 4 de sorte à induire des déformations oscillatoires de celui-ci. Par exemple, la fréquence du courant délivré peut être comprise entre 10 et 200 kHz et la tension entre 30 et 500 V.

L'élément piézo-électrique 3, 4 est par exemple en céramique de type PZT (titanate et zirconate de plomb) et sous la forme d'une plaquette parallélépipédique rectangle dont la longueur est supérieure à l'épaisseur, par exemple de l'ordre de 10 fois supérieure.

La pièce mobile 2 est destinée à se déplacer sous l'action de la force motrice engendrée par les déformations oscillatoires de l'élément piézo-électrique 3, 4.

La transmission à la pièce mobile 2 de la force motrice engendrée par les déformations oscillatoires de l'élément piézo-électrique 3, 4 est réalisée au moyen d'au moins une micro crémaillère 6, 7 qui est effectuée, par exemple par gravure, sur la pièce mobile 2.

La géométrie de la micro crémaillère 6, 7 est telle qu'elle présente une surface sur laquelle, dans une partie du cycle de déformation, l'élément piézo-électrique 3, 4 exerce une force permettant le déplacement de la pièce mobile 2 et, une deuxième surface le long de laquelle, sur une deuxième partie du cycle de déformation, l'élément piézo-électrique 3, 4 n'exerce sensiblement aucun effort sur la pièce mobile 2.

Dans les modes de réalisation représentés, la pièce mobile 2 est de forme parallélépipédique rectangle et la micro crémaillère 6, 7 est disposée suivant un axe de la pièce mobile 2. Le mouvement de la pièce mobile 2 est alors linéaire.

Dans une variante (non représentée), la pièce mobile 2 n'est pas de forme parallélépipédique rectangle et/ou la micro crémaillère 6, 7 n'est pas disposée suivant un axe de la pièce mobile 2 de sorte à fournir un dispositif d'actionnement dont le mouvement de la pièce mobile 2 n'est pas linéaire. Par exemple la pièce mobile 2 est de forme cylindrique et la micro crémaillère 6, 7 est disposée suivant sa circonférence de sorte à déplacer la pièce mobile 2 en rotation. Dans un exemple supplémentaire, la micro crémaillère 6, 7 est disposée sur le pourtour d'une pièce mobile 2 de forme quelconque suivant un hélice de sorte à déplacer la pièce mobile 2 simultanément en rotation et en translation.

De tels dispositifs permettent d'actionner toutes sortes de systèmes par l'intermédiaire du déplacement de la pièce mobile 2. Citons parmi les applications possibles des dispositifs suivant l'invention, l'application à l'actionnement de contacts électriques dans des contacteurs disjoncteurs de type relais.

Nous allons maintenant décrire, en relation avec les figures jointes, deux modes de réalisation d'un dispositif d'actionnement.

Sur les figures l'axe XX' correspond à l'axe de déplacement de la pièce mobile 2 et l'axe YY' est perpendiculaire, dans le plan des figures, à l'axe XX'. Ces axes définissent pour la pièce mobile 2 les termes : extrémité haute 8 (du coté X), extrémité basse 9 (du coté X'), face droite 10 (du coté Y) et face gauche 14 (du coté Y').

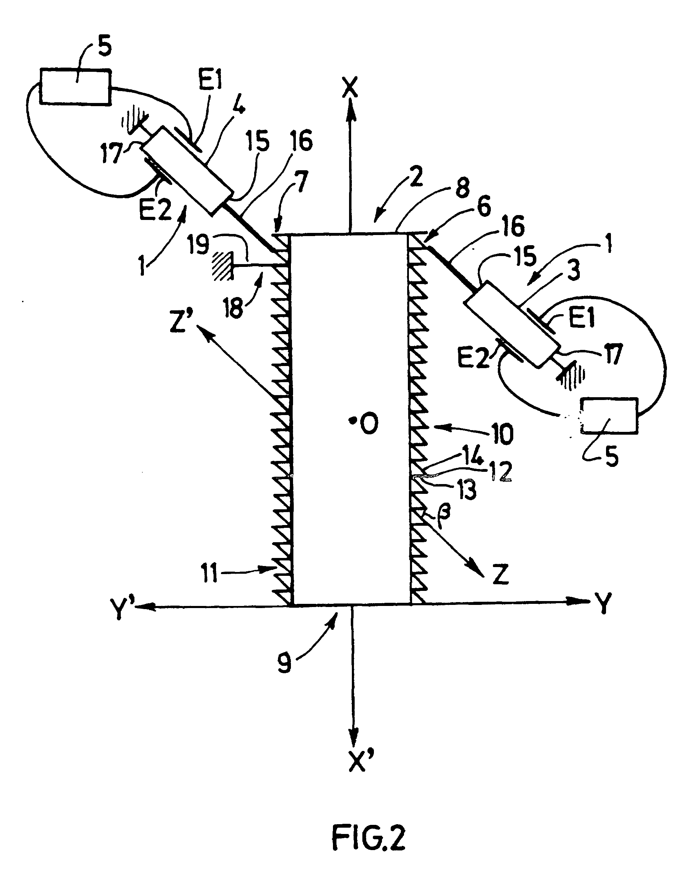

Dans le premier mode de réalisation représenté sur la figure 2, la pièce mobile comprend une micro crémaillère 6 et est déplacée par un moteur piézo-électrique 1 alors que dans le deuxième mode de réalisation représenté sur la figure 2, la pièce mobile comprend deux micro crémaillères 6, 7 et est déplacée par deux moteurs piézo-électriques 1.

La pièce mobile 2, par exemple formée en matériau céramique, est de forme parallélépipédique rectangle. Sur la face droite 10 de la pièce mobile 2, une micro crémaillère 6 a été gravée suivant la direction XX'.

Dans le deuxième mode de réalisation, une seconde micro crémaillère 7 est formée sur la face gauche 11 de la pièce mobile 2. Les deux micro crémaillères 6, 7 sont agencées de façon symétrique par rapport au centre O de la pièce mobile 2.

Dans les modes de réalisation représentés, la direction XX' correspond à la grande longueur de la pièce mobile 2.

Le mouvement de la pièce mobile est alors linéaire suivant la direction XX' de propagation de la micro crémaillère 6, 7.

Les micro crémaillères 6, 7 sont formées d'une succession de dièdres 12 présentant une paroi 13 perpendiculaire à la direction XX' (direction YY') et une seconde paroi 14 formant un angle aigu β (direction ZZ'), par exemple de l'ordre de 45°, avec ladite première paroi 13.

Dans les modes de réalisation représentés, les éléments piézo-électriques 3, 4 sont disposés respectivement en regard de la micro crémaillère 6, 7 suivant la direction ZZ', de sorte à être parallèle aux dites secondes parois 14.

Un générateur 5 de courant alternatif réglable en fréquence et en amplitude alimente les éléments piézo-électriques 3, 4 par l'intermédiaire de deux électrodes E1, E2 situées de part et d'autre de chacun des éléments piézo-électriques 3, 4. Par exemple, les deux électrodes E1, E2 sont disposées de part et d'autre de la dimension la plus petite de l'élément piézo-électrique 3, 4.

Sur l'extrémité 15 des éléments piézo-électriques 3, 4 qui se trouvent en regard de la pièce mobile 2, est disposée, par exemple par collage ou analogue, une tige de transmission 16 de la déformation oscillatoire de l'élément piézo-électrique. La tige de transmission 16 est conformée, notamment de part sa taille, de sorte à pouvoir s'engager et se désengager de la micro crémaillère 6, 7 sous l'action des déformations de l'élément piézo-électrique 3, 4.

Bien que les modes de réalisation présentés prévoient que les moteurs piézo-électrique 1 comprennent une telle tige de transmission 16, on peut envisager que ce soit directement l'élément piézo-électrique 3, 4 qui vienne s'engager dans la micro crémaillère 6, 7.

Les éléments piézo-électriques 3, 4 sont fixés par leur extrémité 17, opposée à la tige de transmission 16 à un support (non représenté) de sorte à être fixe par rapport à la pièce mobile 2.

La disposition relative d'un élément piézo-électrique 3, 4 avec une micro crémaillère 6, 7 est telle que les déformations oscillatoires de l'élément piézo-électrique 3, 4 induisent sur une partie du cycle de déformation l'engagement de la tige de transmission 16 dans la micro crémaillère 6, 7 et sur l'autre partie du cycle son désengagement.

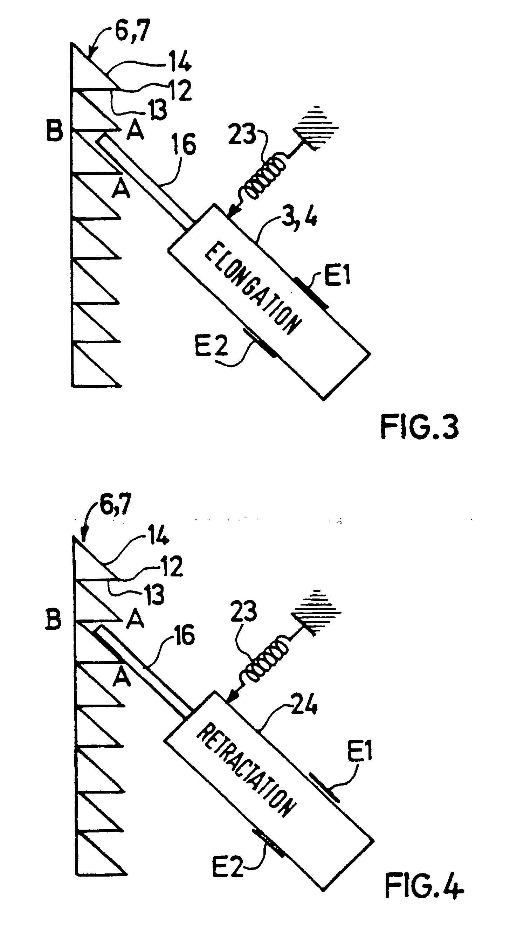

Par exemple, la micro crémaillère 6, 7 est formée d'une succession de dièdres 12 qui ont une hauteur (i.e. la distance AB suivant la direction YY' représentée sur les figures 3 à 6) de l'ordre de grandeur de l'amplitude des déformations oscillatoires de l'élément piézo-électrique 3, 4. Par exemple, la hauteur des dièdres est compris entre 0,5 et 5µm.

Un dispositif de blocage 18 en position peut être prévu pour retenir la pièce mobile 2 lorsque la tige de transmission 16 est désengagée de la micro crémaillère 6, 7 et notamment lorsque l'élément piézo-électrique 3, 4 n'est pas alimenté en courant électrique.

Par exemple, le dispositif de blocage 18 est formé d'une lame flexible 19 dont une extrémité s'engage dans les dièdres 12 successifs lors du déplacement de la pièce mobile 2. Cette lame 19 étant suffisamment rigide pour maintenir en position la pièce mobile 2 lorsque la tige de transmission 16 est désengagée.

Le dispositif de blocage 18 peut également être formé de plaques frottant la pièce mobile 2 si l'on peut admettre une petite perte d'énergie par frottement.

La lame 19 est prévue à proximité d'un moteur piézo-électrique 1 sans toutefois interférer avec les déformations oscillatoires de l'élément piézo-électrique 3, 4 et de la tige de transmission 16 qui lui est associée. Par exemple, la lame 19 est située en regard du dièdre 12 adjacent à celui dans lequel la tige de transmission 16 vient s'engager.

Dans le premier mode de réalisation, la lame 19 est montée en rotation autour d'un axe 20 et est actionnée, par exemple par un électroaimant 27 ou par un moteur piézo-électrique supplémentaire, respectivement dans une position active ou dans une position passive.

En position active, la lame 19 vient s'engager dans les dièdres 12 successifs de sorte à retenir la pièce mobile 2 en position lorsque la tige de transmission 16 n'est pas engagée dans un dièdre 12.

En position passive, la lame 19 est tournée d'un angle suffisant pour être éloignée de la micro crémaillère 16 et donc pour ne pas venir interférer avec le mouvement de la pièce mobile 2.

En variante (non représentée), la lame 19 peut être actionnée par deux butées de fin de course prévues sur chacune des extrémités respectivement haute 8 et basse 9 de la pièce mobile 2. Les deux butées et la lame 19 sont situées sur un axe décalé par rapport au moteur piézo-électrique 1 de sorte à ce que ces éléments ne viennent pas interférer avec le moteur piézo-électrique 1 lors du déplacement de la pièce mobile 2. Le dispositif de blocage 18 passe alors d'une position active à une position passive et vis versa à chaque fin de course de la tige de transmission 16 dans la micro crémaillère 6.

Le principe de fonctionnement d'un tel moteur est alors d'alimenter l'élément piézo-électrique 3 en courant électrique de sorte à déplacer la pièce mobile 2 dans le sens X. Pendant ce déplacement, la lame 19 est engagée (position active) dans la micro crémaillère 6 de sorte à retenir la pièce mobile 2, notamment en cas de coupure de l'alimentation électrique.
Un ressort 22 est associé d'une part à l'extrémité basse 9 de la pièce mobile 2 et d'autre part à un support fixe (non représenté). Lors du déplacement de la pièce mobile 2 dans le sens X, le ressort 22 se tend progressivement.

En fin de course de la pièce mobile 2 dans le sens X, l'alimentation électrique de l'élément piézo-électrique 3 est coupée. Le dispositif de blocage 18 est alors actionné vers une position passive de sorte à libérer la pièce mobile 2.

Le retour dans le sens X' de la pièce mobile 2 est alors assuré par la force mécanique exercée par le ressort 22 sur la pièce mobile 2. En fin de course dans le sens X', le dispositif de blocage 18 est alors actionné vers une position active. L'élément piézo-électrique 3 peut alors être de nouveau alimenté en courant électrique de sorte à assurer un nouveau déplacement de la pièce mobile 2 dans le sens X.

On obtient ainsi une translation double sens de la pièce mobile 2, dans le sens X en alimentant électriquement l'élément piézo-électrique 3, le dispositif de blocage 18 étant en position active, et dans le sens X' en coupant l'alimentation électrique de l'élément piézo-électrique 3, le dispositif de blocage 18 étant en position passive.

Dans le cas où le dispositif de blocage 18 est actionné par deux butées, le basculement du dispositif de blocage 18 est réalisé automatiquement à chaque fin de course de la pièce mobile 2 dans le sens X ou dans le sens X'. La coupure de l'alimentation électrique de l'élément piézo-électrique 3 se fait alors postérieurement au basculement du dispositif de blocage 18.

Dans le deuxième mode de réalisation représenté sur la figure 2, l'extrémité de la lame opposée à la micro crémaillère 6 est fixée à un support, par exemple le même support que celui auquel l'élément piézo-électrique 3 est fixé. Dans cette configuration, le dispositif de blocage 18 est toujours en position active.

La translation double sens est obtenue en alimentant successivement le premier élément piézo-électrique 3 pour obtenir la translation suivant X puis le second 4 pour obtenir la translation dans le sens X'.

En effet, les deux micro crémaillères 6, 7, notamment en étant symétrique par rapport au centre O de la pièce mobile 2, présentent des profils aptes à permettre le déplacement de la pièce mobile 2 chacune dans un sens différent.

Nous allons maintenant décrire, en relation avec les figures 3 à 6, deux modes de réalisation du moteur piézo-électrique 1 ainsi que le principe de fonctionnement de la transmission à la pièce mobile 2 de la force motrice engendrée par les déformations de l'élément piézo-électrique 3, 4 par l'intermédiaire de la micro crémaillère 6, 7.

Dans la description qui suit, le point A correspondant à un sommet commun à deux dièdres 12 adjacents et le point B correspondant à une base commune à deux dièdres 12 adjacents

Dans ce mode de réalisation, le passage d'un dièdre 12 à l'autre au niveau du point A peut être facilité par l'action d'un ressort 23 s'exerçant, sur l'élément piézo-électrique 3, 4 ou directement sur la tige de transmission 16, dans le sens

Dans le première mode de réalisation, la déformation de l'élément piézo-électrique 3, 4 est essentiellement une déformation par élongation. La tige de transmission est alors animée d'un mouvement linéaire périodique.

A cet effet, le matériau formant l'élément piézo-électrique 3, 4 est choisi pour subir des déformations oscillatoires essentiellement par élongation à la fréquence d'excitation utilisée. De tels matériaux sont disponibles commercialement en fonction des caractéristiques souhaitées.

Le principe de transmission de la force motrice engendrée par l'élément piézo-électrique 3, 4 se déformant essentiellement par élongation est alors le suivant

Dans une première partie du cycle de déformation (voir figure 3), l'élément piézo-électrique 3, 4 s'allonge. L'extrémité de la tige de transmission 16 passe alors du voisinage du point A au voisinage du point B.

Ce passage du point A au point B, se fait le long de la paroi 13 du dièdre 12 formant un angle β avec la tige de transmission 16 (direction XX'). Au cours de ce passage, la tige de transmission 16 s'allonge et donc pousse sur ladite paroi 13 de sorte à déplacer la pièce mobile 2.

Dans une deuxième partie du cycle de déformation (voir figure 4), l'élément piézo-électrique 3, 4 se rétracte et l'extrémité de la tige de transmission 16 passe du voisinage du point B au voisinage du point A.

Ce passage du point B au point A, se fait le long de la paroi 14 du dièdre 12 parallèle à la tige de transmission 16 (direction ZZ'). Au cours de ce passage, la tige de transmission 16 se rétracte et donc se désengage de la micro crémaillère 6, 7 sans provoquer de mouvement substantiel de la pièce mobile 2.

Dans ce mode de réalisation, le passage d'un dièdre 12 à au niveau du point A peut être facilité par l'action d'un ressort 23 s'exerçant, sur l'élément piézo-électrique 3, 4 ou directement sur la tige de transmission 16, dans le sens inverse du déplacement de la pièce mobile 2, par exemple perpendiculairement à l'axe ZZ'.

La succession des cycles d'élongation et de contraction de l'élément piézo-électrique 3, 4 provoque donc un mouvement linéaire continu de la pièce mobile 2 dans le sens X, respectivement X'.

La vitesse de déplacement de la pièce mobile 2 est alors imposée par la fréquence des déformations oscillatoires de l'élément piézo-électrique 3, 4.

Un moyen de s'affranchir de cette contrainte est, par exemple, de pulser le courant d'alimentation de l'élément piézo-électrique 3, 4 au moyen d'une commande électronique.

Le courant pulsé induit alors des périodes pendant lesquelles l'élément piézo-électrique 3, 4 est alimenté en courant et donc pendant lesquelles la pièce mobile 2 se déplace (temps actifs), et des périodes où le courant est nul et donc où la pièce mobile 2 ne se déplace pas (temps mort).

En commandant la fréquence de pulsation du courant d'alimentation de l'élément piézo-électrique 3, 4, on peut ainsi réguler la vitesse moyenne de déplacement de la pièce mobile 2. En effet, plus la durée de l'intégrale des temps morts est importante, plus la vitesse moyenne de déplacement sera réduite.

Dans le deuxième mode de réalisation, la déformation de l'élément piézo-électrique 3, 4 est une déformation par élongation et par flexion. La tige de transmission 16 est alors animée d'un mouvement elliptique périodique dû à la combinaison entre un mouvement linéaire et un mouvement de balayage induit respectivement par l'élongation et par la flexion périodique de l'élément piézo-électrique 3, 4.

A cet effet, l'élément piézo-électrique 3, 4 est formé de deux plaquettes piézo-électriques 24, 25 accolées l'une à l'autre sur une partie de leur surface respective, par exemple par collage. Chacune des deux plaquettes 24, 25 comprend deux électrodes E1, E2 situées de part et d'autre de leur surface respective et un moyen d'alimentation électrique 5, par exemple différent.

Dans une première variante, les deux plaquettes 24, 25 sont alimentées avec un courant de fréquence donné. Les deux moyens d'alimentation électrique 5 permettent alors de fournir deux signaux électriques de tension différente.

Le matériau de la première plaquette 24 est tel que la fréquence appliquée excite principalement son mode de résonance de déformation par élongation alors que le matériau de la deuxième plaquette 25 est excité principalement en flexion à la fréquence considérée.

Ces deux matériaux sont par exemple en PZT avec des compositions chimiques et/ou des propriétés structurales différentes.

Dans cette variante de réalisation, la tige de transmission 16 décrit une ellipse dont la période dépend de la fréquence appliquée au deux plaquettes.

De même que dans le mode de réalisation précédent, la vitesse de déplacement de la pièce mobile 2 peut être régulée par une commande électronique de fréquence de pulsation du courant d'alimentation.

Dans une deuxième variante, les deux plaquettes 24, 25 sont formées avec le même matériau céramique.

La deuxième plaquette 25 est alimentée en courant à une première fréquence permettant d'exciter principalement son mode de résonance de déformation par flexion et la première plaquette 24 est alimentée en courant à une deuxième fréquence harmonique de la première fréquence permettant d'exciter principalement son mode de résonance de déformation par élongation.

La synchronisation entre le mouvement d'élongation et le mouvement de flexion est alors effectuée au moyen d'une commande électronique de sorte à ce que la tige de transmission 16 décrive périodiquement une ellipse.

Le principe de transmission de la force motrice engendrée par l'élément piézo-électrique 3, 4 se déformant essentiellement par élongation et par flexion est alors le suivant.

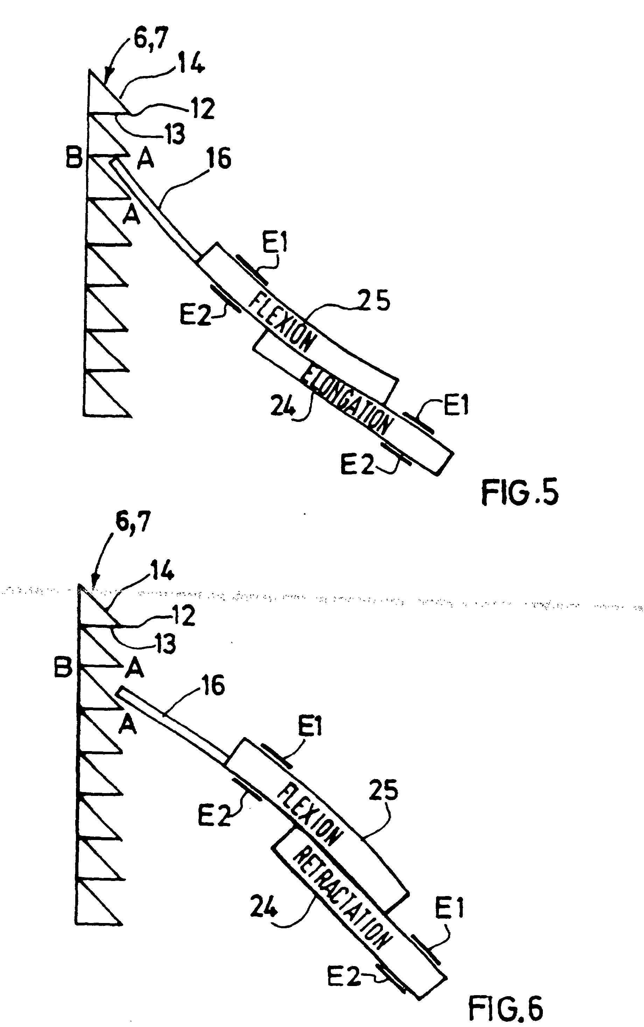

Dans une première partie du cycle de déformation (voir figure 5), l'élément piézo-électrique 3, 4 s'allonge et fléchit dans le sens du déplacement de l'élément mobile 2. L'extrémité de la tige de transmission 16 passe alors du voisinage du point A au voisinage du point B.

Ce passage du point A au point B, se fait le long de la paroi 13 du dièdre 12 formant un angle β avec la tige de transmission 16 (direction ZZ'). Au cours de ce passage, la tige de transmission 16 pousse sur ladite paroi 13 de sorte à déplacer la pièce mobile 2.

Dans une deuxième partie du cycle de déformation (voir figure 6), l'élément piézo-électrique 3, 4 se rétracte et fléchit dans la direction opposée au déplacement de l'élément mobile 2. L'extrémité de la tige de transmission 16 passe alors du voisinage du point B au voisinage du point A.

Ce passage du point B au point A, se fait le long de la paroi 14 du dièdre 12 parallèle à la tige de transmission 16 non déformée (direction ZZ'). Au cours de ce passage, la tige de transmission 16 se désengage de la micro crémaillère 6, 7 sans provoquer de mouvement substantiel de la pièce mobile 2.

La succession des cycles de déformation de l'élément piézo-électrique 3, 4 provoque donc un mouvement linéaire continu de la pièce mobile 2 dans le sens X, respectivement X'.

Dans cette variante de réalisation, la commande électronique associée au moyens d'alimentation 5 est apte d'une part à réguler la vitesse de déplacement et d'autre part à synchroniser le mouvement d'élongation de la plaquette 24 et celui de flexion de la plaquette 25.

Si, par exemple, la fréquence de déformation par flexion est plus basse que la fréquence de déformation par élongation, la commande électronique pulsera le courant du moyen d'alimentation 5 de sorte à synchroniser les deux déformations à des moments adéquats pour provoquer le déplacement de la pièce mobile 2.

En outre, un dispositif d'actionnement suivant le deuxième mode de réalisation permet, grâce à la flexion de l'élément piézo-électrique 3, 4, le passage de la tige de transmission 16 d'un dièdre 12 au dièdre adjacent sans l'aide d'une force mécanique extérieure appliquée sur la tige de transmission 16.

## Revendications

1. Dispositif d'actionnement comprenant au moins un moteur piézo-électrique (1) et une pièce mobile (2), dans lequel ledit moteur piézo-électrique (1) est formé d'au moins un élément piézo-électrique (3, 4) associé à des moyens d'alimentation (5) en courant électrique permettant d'induire des déformations oscillatoires en élongation dudit élément piézo-électrique (3, 4), la pièce mobile (2) comprenant au moins une micro-crémaillère (6, 7) destinée à permettre la transmission à la pièce mobile (2) de la force motrice engendrée par les déformations oscillatoires de l'élément piézo-électriques (3, 4), la micro-crémaillère (6, 7) étant formée d'une succession de dièdres (12) présentant une première paroi (13) ayant une hauteur de l'ordre de grandeur de l'amplitude des déformations oscillatoires de l'élément piézo-électrique (3, 4) et présentant une deuxième paroi (14) formant un angle aigu (β) avec la première paroi (13), une tige de transmission (16) des déformations étant associée à l'élément piézo-électrique (3, 4) pour venir s'engager et se désengager de la micro-crémaillère (6, 7) lorsque l'élément piézo-électrique (3, 4) se déforme de façon oscillatoire, **caractérisé en ce que** l'élément piézo-électrique (3, 4) est disposé en regard de la micro-crémaillère (6, 7) suivant une direction (ZZ') parallèle à la deuxième paroi (14) pour que la tige de transmission (16), dans une partie du cycle de déformation, exerce une force sur la première paroi (13) permettant le déplacement de la pièce mobile (2) et dans une deuxième partie du cycle de déformation, n'exerce aucun effort sur la pièce mobile (2) en passant le long de la deuxième paroi (14).

2. Dispositif selon la revendication 1, **caractérisé en ce qu'**un ressort (23) est associé à la tige de transmission (16) pour faciliter le passage de la tige de transmission (16) d'un dièdre (12) au dièdre adjacent lors du déplacement de la pièce mobile (2).

3. Dispositif selon la revendication 1, **caractérisé en ce que** la déformation de l'élément piézo-électrique (3, 4) est une déformation par élongation et par flexion.

4. Dispositif selon la revendication 1 ou 3, **caractérisé en ce qu'**une commande électronique associée aux moyens d'alimentation (5) est apte à commander la vitesse de déplacenent de la pièce mobile (2) et apte à synchroniser la déformation par élongation et déformation par flexion de l'élément piézo-électrique (3, 4).

5. Dispositif selon l'une des revendications 1 à 4, **caractérisé en ce qu'**un ressort de rappel (22) est associé à l'élément mobile (2), et **en ce qu'**il comprend des moyens de blocage (18) en position de la pièce mobile (2).

6. Dispositif selon l'une quelconque des revendications 1 à 4, **caractérisé en ce qu'**il comprend deux micro-crémaillères (6, 7) présentant des profils aptes à permettre un déplacement de la pièce mobile (2) chacun dans un sens différent, deux moteurs piézo-électriques (1) alimentés successivement pour obtenir le déplacement de la pièce mobile (2) dans les deux sens et **en ce qu'**il comprend des moyens de blocage (18) en position de la pièce mobile (2).

## Patentansprüche

1. Betätigungsvorrichtung enthaltend wenigstens einen piezoelektrischen Motor (1) und ein bewegliches Teil (2), wobei der piezoelektrische Motor (1) gebildet ist durch wenigstens ein piezoelektrisches Element (3, 4), das mit Versorgungsmitteln (5) für elektrischen Strom verbunden ist, die es erlauben, schwingende Verformungen im Sinne einer Dehnung des piezoelektrischen Elements (3, 4) hervorzubringen, wobei das bewegliche Teil (2) wenigstens eine Mikro-Zahnstange (6, 7) aufweist, die dazu bestimmt ist, eine Übertragung der durch die schwingenden Verformungen des piezoelektrischen Elements (3, 4) hervorgerufenen Bewegungskraft auf das bewegliche Teil (2) zu ermöglichen, wobei die Mikro-Zahnstange (6, 7) durch eine Folge von V-Winkeln (12) gebildet ist, die eine erste Wand (13) mit einer Höhe in der Größenordnung der Amplitude der schwingenden Deformationen des piezoelektrischen Elements (3, 4) aufweisen und die eine zweite Wand (14) aufweisen, welche mit der ersten Wand (13) einen spitzen Winkel (β) bildet, wobei eine Stange (16) zur Übertragung der Verformungen mit dem piezoelektrischen Element (3, 4) verbunden ist, um sich in die Mikro-Zahnstange (6, 7) einzuklinken und auszuklinken, wenn das piezoelektrische Element (3, 4) sich in schwingender Weise verformt, **dadurch gekennzeichnet, dass** das piezoelektrische Element (3, 4) relativ zur Mikro-Zahnstange (6, 7) in einer Richtung (ZZ') parallel zur zweiten Wand (14) angeordnet ist, damit die Übertragungsstange (16) in einem Teil des Verformungszyklus eine Kraft auf die erste Wand (13) ausüben kann, um eine Bewegung des beweglichen Teiles (2) zu ermöglichen, und in einem zweiten Teil des Verformungszyklus beim Bewegen entlang der zweiten Wand (14) keine Belastung auf das bewegliche Teil (2) ausübt.

2. Vorrichtung nach Anspruch 1, **dadurch gekennzeichnet, dass** eine Feder (23) mit der Übertragungsstange (16) verbunden ist, um die Bewegung der Übertragungsstange (16) von einem V-Winkel (12) zum benachbarten V-Winkel während der Verschiebung des beweglichen Teils (2) zu erleichtern.

3. Vorrichtung nach Anspruch 1, **dadurch gekennzeichnet, dass** die Verformung des piezoelektrischen Elements (3, 4) eine Verformung durch Dehnung und durch Biegung ist.

4. Vorrichtung nach Anspruch 1 oder 3, **dadurch gekennzeichnet, dass** eine mit den Versorgungsmitteln verbundene elektronische Steuerung geeignet ist, die Verschiebungsgeschwindigkeit des beweglichen Teils (2) zu steuern und die Verformung durch Dehnung und die Verformung durch Biegung des piezoelektrischen Elementes (3, 4) zu synchronisieren.

5. Vorrichtung nach einem der Ansprüche 1 bis 4, **dadurch gekennzeichnet, dass** eine Rückholfeder (22) mit dem beweglichen Teil (2) verbunden ist und dass sie Mittel (18) zur Arretierung in einer Stellung des beweglichen Teils (2) aufweist.

6. Vorrichtung nach einem der Ansprüche 1 bis 4, **dadurch gekennzeichnet, dass** sie zwei Mikro-Zahnstangen (6, 7), welche Profile aufweisen, die geeignet sind, eine Verschiebung des beweglichen Teils (2) jeweils in eine unterschiedliche Richtung zu ermöglichen, und zwei piezoelektrische Motoren (1), die nacheinander gespeist werden, um eine Verschiebung des beweglichen Teils (2) in die zwei unterschiedlichen Richtungen zu erhalten, aufweist und dass sie Mittel (18) zur Arretierung in einer Stellung des beweglichen Teils (2) aufweist.

## Claims

1. An actuation device comprising at least one piezoelectric motor (1) and a movable part (2), in which said piezoelectric motor (1) is formed by at least one piezoelectric element (3,4) associated with means (5) for supplying electric current making it possible to cause oscillatory deformations by elongation of said piezoelectric element (3,4), the movable part (2) comprising at least one micro-rack (6,7) intended to allow the transmission to the movable part (2) of the driving force generated by the oscillatory deformations of the piezoelectric element (3,4), said micro-rack (6,7) being formed by a succession of dihedrons (12) having a first wall (13) whose height is of the same order of magnitude as the magnitude of the oscillatory deformations of the piezoelectric element (3,4), and having a second wall (14) forming an acute angle (β) with said first wall (13), a rod (16) for transmission of the deformations being associated with said piezoelectric element (3,4) for engaging and disengaging with said micro-rack (6,7) when said piezoelectric element (3,4) is experiencing said oscillatory deformation, **characterized in that** said piezoelectric element (3,4) is disposed opposite the micro-rack (6,7) in the direction (ZZ') parallel to said second rack (14) so that the transmission rod (16) exerts, in a part of the deformation cycle, a force on said first wall (13) allowing the movement of said movable part (2) and, in a second part of the deformation cycle, the rod does not exert any force on said movable part (2) by passing along said second wall (14).

2. A device according to claim 1, **characterized in that** a spring (23) is associated with the transmission rod (16) in order to facilitate the passage of the transmission rod (16) from one dihedron (12) to the adjacent dihedron during the movement of the movable part (2).

3. A device according to claim 1, **characterized in that** the deformation of the piezoelectric element (3,4) is a deformation by elongation and flexion.

4. A device according to claims 1 or 3, **characterized in that** an electronic control associated with the electric current supply means (5) is able to control the speed of movement of the movable part (2) and is able to synchronise the deformation by elongation and the deformation by flexion of the piezoelectric element (3,4).

5. A device according to anyone of claims 1 to 4, **characterized in that** a return spring (22) is associated with the movable element (2) and comprises means (18) of locking the movable part (2) in position.

6. A device according to anyone of claims 1 to 4, **characterized in that** it comprises two micro-racks (6,7) having profiles able to allow the movement of the movable part (2) each in a different direction, two piezoelectric motors (1) successively powered to obtain the movement of the movable part (2) in each direction, and means (18) for locking the movable part (2) in position.
